# EUROPEAN PATENT SPECIFICATION

(11) **EP 2 151 946 B1**
(45) Date of publication and mention of the grant of the patent: **23.12.2015**
(21) Application number: 07855943.2
(22) Date of filing: 29.12.2007
(51) Int. Cl.: H04L 9/08

(54) **A METHOD FOR DETECTING THE KEY OF THE GIGABIT PASSIVE OPTICAL NETWORK**
VERFAHREN ZUM DETEKTIEREN DES SCHLÜSSELS DES PASSIVEN OPTISCHEN GIGABIT-NETZWERKS
PROCÉDÉ DE DÉTECTION DE LA CLÉ DU RÉSEAU OPTIQUE PASSIF GIGABIT

(30) Priority: 10.05.2007 CN 200710104375
(43) Date of publication of application: 10.02.2010
(73) Proprietor: ZTE Corporation, Shenzhen, Guangdong 518057 (CN)
(72) Inventor: ZHANG, Weiliang, Guangdong 518057 (CN); XIA, Shundong, Guangdong 518057 (CN)
(74) Representative: Appleyard Lees
(86) International application number: PCT/CN2007/003943
(87) International publication number: WO 2008/138188

(56) References cited:
- CN-A- 1 897 500
- CN-A- 1 953 367
- US-A- 5 920 627
- US-A1- 2002 110 245
- US-A1- 2005 135 609
- US-A1- 2006 129 491

## Description

### Technical Field

The present invention relates to a key management technique of secure data transmission in a gigabit passive optical network (GPON) in the communication field, and in particular, to a technique for detecting keys of an optical line terminal (OLT) and an optical network unit (ONU) in the GPON.

### Background of the Invention

GPON is a new generation broadband passive optical integrated access technology based on ITU-T G.984x standard, and the system generally consists of an OLT at the office end side, ONUs/ONTs (Optical Network Termination) at the user side, and an ODN (Optical Distribution Network). The ODN, consisting of passive optical devices such as single mode fiber, optical splitter, optical connector, and so on, provides optical transmission media between the OLT and the ONUs. The ODN generally has a structure of point-to-multipoint, i.e., one OLT connects with multiple ONUs. Data sent to ONUs by the OLT is referred to as downstream data, and data sent to the OLT by ONUs is referred to as upstream data.

In a GPON system, the downstream data has a broadcast property, and data sent by an OLT can be received by all ONUs connected thereto, and a malicious user may re-program a held ONU and thereby can listen to all the downstream data of all the users. In regard to security, ITU-T G.984.3 suggests using an encryption technology based on AES (Advanced Encryption Standard) to encrypt the downstream data, and an OLT and an ONU each stores a key. A key management flow between the OLT and the ONU can be divided into two stages: key exchange and key switch-over.

In the stage of key exchange, the OLT sends an Request_Key message to the ONU, the ONU generates a new key and a key index and stores them in the shadow_key register, then sends the new key and the key index to the OLT, and the OLT stores the key and the key index in its shadow_key register.

In the stage of key switch-over, the OLT selects a frame number (which may be referred to as a key switch-over frame number) as the first frame on which the new key is used, and the OLT transfers the multi-frame number of the frame to the ONU through a Key_switching time message. The message will be sent for three times, and the ONU only needs to receive one correct copy therein to learn the key switch-over frame number. The ONU sends an acknowledgement message to the OLT, indicating that the key switch-over frame number is obtained. At the start of the first frame that the new key should be used, the OLT copies the content in the shadow_key register into the active_key register, and the ONU copies its shadow_key register into the active_key register, and both the OLT and the ONU start from the same frame to use the new key to encrypt and decrypt the downstream data. The keys in the active_key registers of the OLT and the ONU can be referred to as current keys.

In the stage of key switch-over, if the OLT is unsuccessful in receiving the acknowledgement message from the ONU, it cannot determine whether the ONU has successfully received the key switch-over frame number. Under such scenarios, no matter whether the OLT performs the key switch-over or not, the inconsistency between the keys of the OLT and the ONU will possibly take place. Supposing the OLT performs the key switch-over, the current keys of the two will be not consistent if the ONU does not receive the key switch-over command from the OLT and there is no key switch-over in the ONU. Supposing the OLT does not perform key switch-over, the current keys of the two will be not consistent either if the ONU has successfully obtained the key switch-over frame number but the acknowledgement message sent by the ONU has been lost (there will be key switch-over in the ONU).

The inconsistency between the keys of an OLT and an ONU will directly cause a result that the data sent by the OLT cannot be correctly decrypted by the ONU, and cause exceptions in the services related to the ONU. ITU-T G.984.x neither takes this situation in which the current keys of an OLT and an ONU may be inconsistent into consideration, nor provides a method for detecting whether the current keys of an OLT and an ONU are consistent.

US 5920627 A1 provides encryption device and decryption device for information conveyed by asynchronous transfer mode cell. An encryption device can be used to encrypt information units conveyed by cells that are broadcast from an optical broadcast node to network units by a passive optical network. Each cell conveys at least one information unit and each information unit is addressed to a respective subscriber terminal. The device includes an encryption system that receives in clear at least one key from at least one decryption device located in a network unit.

### Summary of the Invention

The purpose of the present invention is to provide a method for detecting keys in a gigabit passive optical network, so that the system can timely discover and handle the situation that the current keys of an OLT and an ONU are not consistent, thus the service exception caused by this situation can be avoided.

In order to achieve the purpose of the present invention, the present invention provides a method for detecting keys in a gigabit passive optical network, used for detecting consistency between current keys of an optical line terminal and an optical network unit in a gigabit passive optical network system; the method comprising the following steps of:
(a) the optical line terminal sending a current key information request message to the optical network unit, and waiting for the optical network unit to return a current key information response message;
(b) if the optical network unit receives the current key information request message, reading current key information stored locally in the optical network unit, and loading read content into the current key information response message and sending the response message to the optical line terminal;
(c) if the optical line terminal receives the current key information response message in a predetermined period, acquiring the current key information of the optical network unit from the response message, and comparing the current key information of the optical network unit with current key information stored locally in the optical line terminal, and according to a result of the comparison, performing corresponding processing.

Furthermore, the current key information request message in step (a) comprises: a target optical network unit identification and a target message identification; wherein, the target optical network unit identification is used to represent a target optical network unit to which the current key information request message is sent; the target message identification is used to indicate to the target optical network unit that the request message is a request for the current key information;
the current key information response message in step (c) comprises: a source optical network unit identification, a source message identification and current key information body data; wherein, the source optical network unit identification is used to represent a source optical network unit from which the current key information response message is sent; the source message identification is used to indicate to the optical line terminal that the response message is a response to the current key information request message; the current key information body data is used by the optical line terminal to acquire a current key information body of the optical network unit from the response message.

Furthermore, the method further comprises:
the current key information being a current key; the current key information response message being current key response messages, and the current key information body data being current key body data; the current key body data further comprising current key fragment indices and current key bodies, and in step (c), according to the current key fragment indices, the optical line terminal splicing multiple fragments of the current key bodies in multiple current key response messages in sequence into a complete current key of the optical network unit.

Furthermore, the method further comprises:
in step (a), the optical line terminal sending a current key request message to the optical network unit; in step (b), if the optical network unit receives the current key request message, reading the current key stored locally in the optical network unit, dividing read content into fragments, loading the fragments into multiple current key response messages and sending the response messages in sequence to the optical line terminal; in step (c), if the result of the comparison is that the current key of the optical network unit is consistent with the current key stored locally in the optical line terminal, the optical line terminal performing processing corresponding to consistency of the current keys; if the result of the comparison is that the current key of the optical network unit is inconsistent with the current key stored locally in the optical line terminal, the optical line terminal performing processing corresponding to inconsistency of the current keys.

Furthermore, during a key switch-over process, if the optical line terminal does not receive an acknowledgement message sent by the optical network unit when a key switch-over frame number arrives, implementation of the step (a) is started by the optical line terminal; in step (c), the processing corresponding to the consistency of the current keys is: the optical line terminal sending information of a success in the key switch-over with the optical network unit; or the processing corresponding to the inconsistency of the current keys performed by the optical line terminal is: the optical line terminal sending information of a failure in the key switch-over with the optical network unit.

Furthermore, in order to locate a reason for a service failure in the gigabyte passive optical network, equipment maintenance personnel manually start implementation of the step (a) from a network element management system; in step (c), the processing corresponding to the consistency of the current keys is: the optical line terminal notifying the network element management system of the consistency between the current keys of the optical line terminal and the optical network unit; or the processing corresponding to the inconsistency of the current keys is: the optical line terminal notifying the network element management system of over the inconsistency between the current keys of the optical line terminal and the optical network unit.

Furthermore, implementation of the step (a) is started by the optical line terminal at definite time; in step (c), the processing corresponding to the consistency of the current keys is: the optical line terminal notifying a network element management system that the current keys of the optical line terminal and the optical network unit are consistent; or the processing corresponding to the inconsistency of the current keys is: the optical line terminal notifying the network element management system that the current keys of the optical line terminal and the optical network unit are inconsistent.

Furthermore, the method further comprises:
in step (c), if the optical line terminal does not receive the current key response messages in the predetermined period, sending information of a failure in detecting the consistency between the current keys.

Furthermore, the method further comprises:
the current key information being a current key index; the current key information response message being a current key index response message, and the current key information body data being current key index body data; in step (a), the optical line terminal sending a current key index request message to the optical network unit; in step (b), if the optical network unit receives the current key index request message, reading the current key index stored locally in the optical network unit, loading read content as the current key index body data into the current key index response message, and sending the response message to the optical line terminal; in step (c), the optical line terminal acquiring the current key index body data as the current key index of the optical network unit; if the result of the comparison is that the current key index of the optical network unit is consistent with the current key index stored locally in the optical line terminal, the optical line terminal performing processing corresponding to consistency of the current keys; if the result of the comparison is that the current key index of the optical network unit is inconsistent with the current key index stored locally in the optical line terminal, the optical line terminal performing processing corresponding to inconsistency of the current keys.

Furthermore, the method further comprises:
in step (c), if the optical line terminal does not receive the current key index response messages in the predetermined period, sending information of a failure in detecting the consistency between the current keys.

Furthermore, the method further comprises:
the current key information being a key switch-over frame number; in step (a), the optical line terminal sending a key switch-over frame number request message to the optical network unit; in step (b), if the optical network unit receives the key switch-over frame number request message, reading the key switch-over frame number stored locally in the optical network unit, loading read content as key switch-over frame number body data into a key switch-over frame number response message, and sending the response message to the optical line terminal; in step (c), the optical line terminal acquiring the key switch-over frame number body data as the key switch-over frame number of the optical network unit; if the result of the comparison is that the key switch-over frame number of the optical network unit is consistent with the key switch-over frame number stored locally in the optical line terminal, the optical line terminal performing processing corresponding to consistency of the current keys; if the result of the comparison is that the key switch-over frame number of the optical network unit is inconsistent with the key switch-over frame number stored locally in the optical line terminal, the optical line terminal performing processing corresponding to inconsistency of the current keys.

Furthermore, the method further comprises:
in step (c), if the optical line terminal does not receive the key switch-over frame number response messages in the predetermined period, sending information of a failure in detecting the consistency between the current keys.

The present invention as a supplement to the key switch-over method in the prior art, triggers the detection of the consistency between current keys of an OLT and an ONU in a GPON in various ways, therefore, the latent inconsistency between the current keys of the OLT and the ONU can be timely discovered, and corresponding processing can be performed, so that the risk of exception occurrence due to the inconsistency between the current keys of the OLT and the ONU in a GPON service can be reduced or avoided. In addition, the present invention fills a gap of ITU-T G.984.x in this respect, and for the development of a gigabit passive optical network, the present invention supplements a standard method lacked therein.

### Brief Description of the Drawings

FIG. 1 is a flow chart of a method for detecting keys in a gigabit passive optical network in accordance with the present invention;
FIG. 2 is a flow chart of application example 1 of the method depicted in FIG. 1;
FIG. 3 is a flow chart of application example 2 of the method depicted in FIG. 1;
FIG. 4 is a flow chart of application example 3 of the method depicted in FIG. 1.

### Preferred Embodiments of the Present Invention

The method for detecting keys in a gigabit passive optical network provided in the present invention is applicable to the detection of consistency between current keys of an OLT and an ONU in a GPON system, and the method adopts the following technical scheme: the GPON triggering the detection of the consistency between the current keys of the OLT and the ONU in various ways, and the OLT sending a current key request message to the ONU to acquire the current key of the ONU; when receiving the request message, the ONU loading its current key into current key response messages and sending the messages to the OLT; when receiving the response messages, the OLT acquiring the current key of the ONU therein and comparing the current key with a current key stored locally, and based on the comparison result, performing corresponding processing. If the OLT does not receive the response messages, it sends warning information of a failure in the detection of the consistency between the current keys of the OLT and the ONU.

The above technical scheme of the present invention will be set forth in detail with specific embodiments and accompanying drawings.

The inconsistency between current keys of an OLT and an ONT occurred in a GPON system can be detected in three ways: the first is directly checking the current keys of the OLT and the ONU; the second is checking the key indices related to the keys of the OLT and the ONU; since every time the ONU generates a new key, it will generate a corresponding key index as well, and will send the new key and the key index to the OLT simultaneously, therefore, by checking the current key indices of the OLT and the ONT, checking whether the current keys of the OLT and the ONU are consistent can be indirectly implemented; the third is checking the key switch-over frame numbers in the OLT and the ONU; since the OLT will select a key switch-over frame number as the key switch-over time and notify the ONU, therefore, checking the key switch-over frame numbers of the OLT and the ONU can be indirectly implemented to check whether the current keys of the OLT and the ONU are consistent.

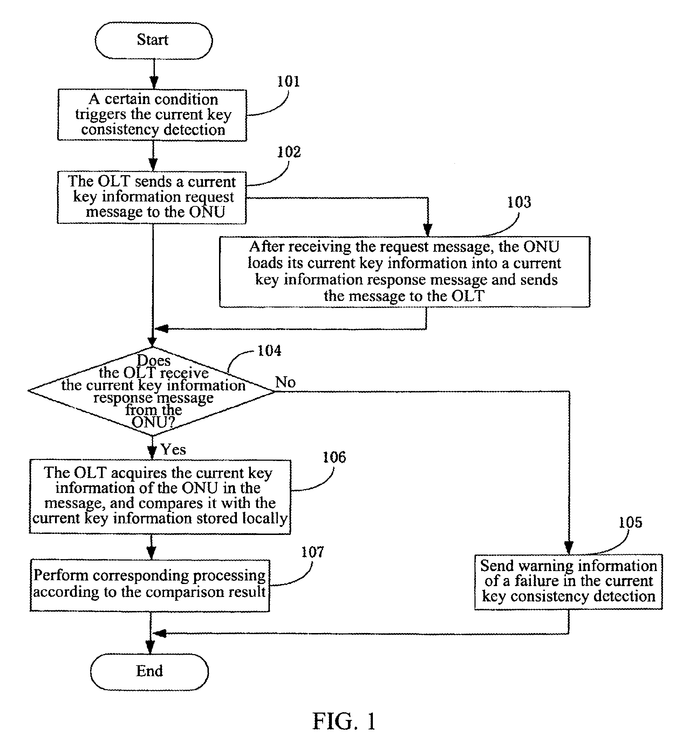

As shown in FIG. 1, the method for detecting keys in a gigabit passive optical network in accordance with the present invention comprises the following steps:
101: Trigger a detection of the consistency between the current keys of an OLT and an ONU on a certain condition;

Herein, the conditions that trigger the detection can be but not limited to:
(1) During the key switch-over, the OLT does not receive an acknowledgement message from the ONU when the key switch-over frame number arrives, then the OLT determines whether there is a key switch-over in the ONU by starting a current key consistency detection;
(2) When equipment maintenance personnel are trying to locate a reason for a service failure, they can initiate a detection of the consistency between the current keys of the OLT and the ONU from the network element management system;
(3) The OLT routinely starts a detection of the consistency between the current keys of it and the ONU at definite time.

The former two types of triggering in the above are passive triggering, i.e., a detection is passively initiated by occurrence of an exception; while the last type of triggering is active triggering, i.e., the OLT can actively initiates a detection of the consistency between the keys of it and the OLT at any time. In other words, the OLT can trigger a detection of the consistency between the keys of it and the ONU in various passive or active ways.

102: The OLT sends a current key information request message to the ONU and waits for the ONU to return a current key information response message;

Herein, the current key information comprises any one or combination of a current key, a current key index or a key switch-over frame number (i.e. a current key switch-over frame number).

103: If the ONU receives the current key information request message from the OLT, it reads the key information in the local active_key register, loads the content read into a current key response message and sends the message to the OLT;

104: The OLT inquires whether the current key information response message returned by the ONU is received in a predetermined period, and if it is not received, proceeds to step 105, while if it is received, proceeds to step 106;

105: The OLT sends information of a failure in current key consistency detection, and the flow ends;

According to the triggering condition corresponding to the current key consistency detection, processing performed can be but not limited to: key switch-over exception processing performed by the OLT; or the OLT reporting the result of the failure in the current key consistency detection to the network element management system.

106: The OLT acquires the current key information of the ONU in the message, and compares it with the current key information stored in the local active_key register;

107: According to the comparison result, the OLT performs corresponding processing, and the flow ends.

### The first embodiment

In order to implement the above detection of the consistency between the current keys of the OLT and the ONU, in this embodiment, above-mentioned two messages, the current key information request message and current key information response message, are defined as follows according to the message format of Physical Layer Operations, Administration and Maintenance (PLOAM) in GPON Transmission Convergence Sub-layer Protocol G.984.3. Of course, content of these two messages may be slightly different in different embodiments.
(1) The current key request message, Request_Current_Key, is a downstream message sent by an OLT to an ONU to acquire the current key of the ONU, and the content and semantic interpretation of each part in the message format is shown in Table 1.

**Table 1**

| Current key request message, Request_Current_Key | | |
|---|---|---|
| Byte | Content | Semantic interpretation |
| 1 | ONU-ID | ONU identification, used to identify the target ONU to which the message is sent |
| 2 | 00010101 | Message identification, used to indicate that it is a Request_Current_Key message |
| 3-12 | Reserved | |

Since the Request_Current_Key message is a downstream message, it has a broadcast property, and after multiple ONUs receive the message, they each determines whether the message is sent to itself according to the ONU identification (ONU-ID) therein, and according to the message identification (00010101), identifies the type of the message as a request for the local current key submitted by the OLT to the ONU.
(2) The current key response message, Current_Encryption_Key, is an upstream message sent by an ONU to an OLT to return the local current key of the ONU, and the content and semantic interpretation of each part in the message format is shown in Table 2.

**Table 2**

| Current key response message, Current_Encryption_Key | | |
|---|---|---|
| Byte | Content | Semantic interpretation |
| 1 | ONU-ID | ONU identification, used to identify the source ONU from which the message is sent |
| 2 | 00001010 | Message identification, used to indicate that it is a Current_Encryption_Key message |
| 3 | Frag-Index | Key fragment index, used to indicate the sequence number of the key fragment carried in the message |
| 4 | KeyBYTE0 | Key byte 0, i.e., the 1^{st} byte of the fragment with the sequence number of Frag-Index of the current key |
| 5 | KeyBYTE1 | Key byte 1, i.e., the 2^{nd} byte of the fragment with the sequence number of Frag-Index of the current key |
| 6 | KeyBYTE2 | Key byte 2, i.e., the 3^{rd} byte of the fragment with the sequence number of Frag-Index of the current key |
| 7 | KeyBYTE3 | Key byte 3, i.e., the 4^{th} byte of the fragment with the sequence number of Frag-Index of the current key |
| 8 | KeyBYTE4 | Key byte 4, i.e., the 5^{th} byte of the fragment with the sequence number of Frag-Index of the current key |
| 9 | KeyBYTE5 | Key byte 5, i.e., the 6^{th} byte of the fragment with the sequence number of Frag-Index of the current key |
| 10 | KeyBYTE6 | Key byte 6, i.e., the 7^{th} byte of the fragment with the sequence number of Frag-Index of the current key |
| 11 | KeyBYTE7 | Key byte 7, i.e., the 8^{th} byte of the fragment with the sequence number of Frag-Index of the current key |
| 12 | Reserved | |

In Table 2, Bytes 3-11 are collectively referred to as current key body data, used for the OLT to acquire a complete current key of the ONU through the key body data. After receiving the Current_Encryption_Key message, according to the message identification (00001010), the OLT identifies the type of the message as a response of the ONU to a current key request, and according to the ONU identification (ONU-ID), finds a corresponding active_key register unit that locally stores the current key body of the ONU, and then from the register unit extracts the current key body locally stored for comparison.

Generally, the length of a key is a plurality of bytes, thus it may be required to stipulate that a key is divided into multiple fragments which are respectively carried in multiple Current_Encryption_Key message bodies to be sent, and the Frag-Index in a message body indicates which fragment of the key the multiple bytes carried in the Current_Encryption_Key message body belong to.

For instance, in this embodiment, the length of a key is 16 bytes and it is stipulated that a key is divided into two fragments, each of which is eight bytes, and the two fragments are respectively carried in two Current_Encryption_Key message bodies to be sent, and the Frag-Index in a message body indicates whether the 8 bytes carried in the Current_Encryption_Key message body belongs to the first fragment of the key or the second fragment of the key. This stipulation in the embodiment is just used to illustrate but not to limit the present invention. Any stipulation made according to the idea of the present invention shall fall into the scope claimed by the present invention.

In order to illustrate how the above two messages are used for detecting the consistency between current keys of an OLT and an ONU in a key switch-over process, application examples will be given below to illustrate this in further detail.

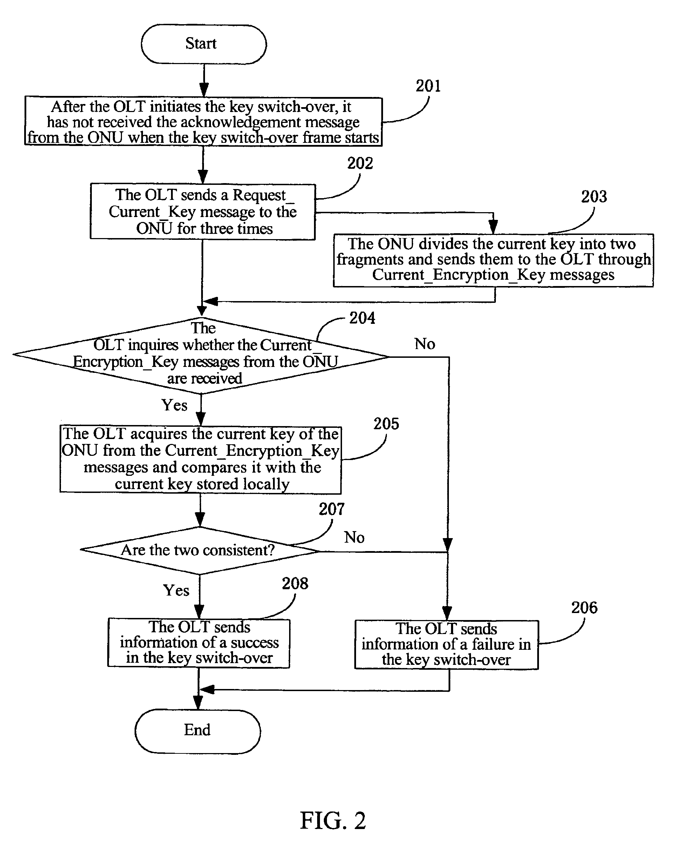

As shown in FIG. 2, for instance, during a key switch-over process, an OLT does not receive an acknowledgement message from an ONU when the key switch-over frame number arrives, then the OLT initiates a current key consistency detection flow, comprising the following steps:

201: After the OLT initiates the key switch-over, it has not received the acknowledgement message from the ONU when the key switch-over frame starts;

202: The OLT sends a Request_Current_Key message to the ONU for three times and waits for the ONU to return Current_Encryption_Key messages;

203: If the ONU receives the Request_Current_Key message from the OLT, it extracts the key from the active_key register and evenly divides the key into two fragments, and fills Current_Encryption_Key messages with the ONU identification, the message identification and the key body information (including a key fragment index and a key body) according to the format of the Current_Encryption_Key message, and sends the messages to the OLT;

204: The OLT inquires whether the Current_Encryption_Key messages from the ONU are received, and if they are received, proceeds to step 205, while if they are not received, proceeds to step 206;

205: The OLT acquires the current key of the ONU from the Current_Encryption_Key messages and compares it with the current key stored locally, and then proceeds to step 207;

The OLT acquires the current key of the ONU according to the key body information of the Current_Encryption_Key messages; and finds the corresponding local active_key register according to the ONU-ID in the Current_Encryption_Key message, and reads the current key stored therein and compares the two keys.

206: The OLT regards the key switch-over with the ONU as failed, and after the OLT sends corresponding information, the flow ends;

207: Check the comparison result to determine whether the two keys are consistent, and if they are consistent, proceed to step 208, while if they are inconsistent, return to step 206;

208: The OLT regards the key switch-over with the ONU as successful, and after the OLT sends corresponding information, the flow ends.

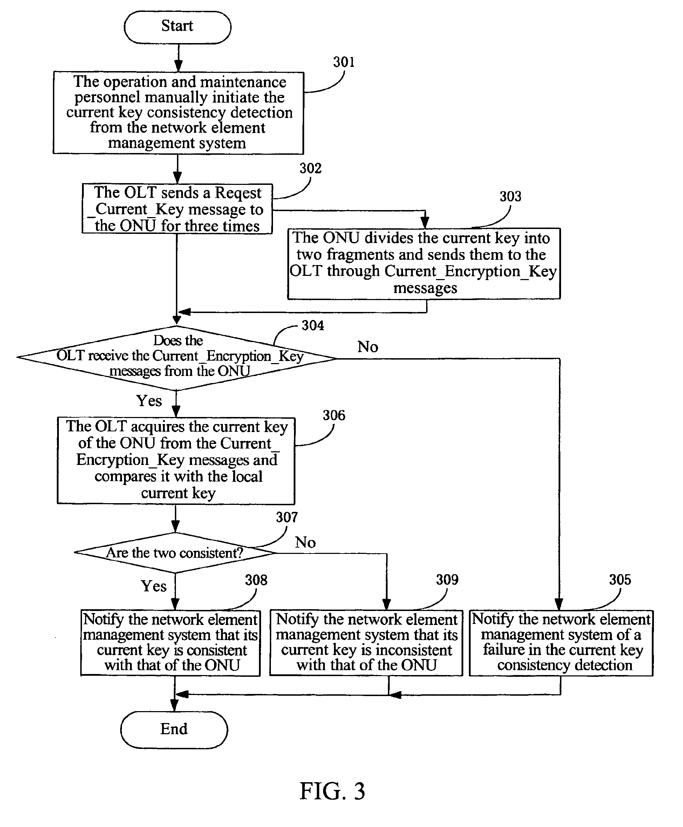

As shown in FIG. 3, when equipment maintenance personnel are notified that a failure is occurred in a GPON service for a user, they need to inquire whether the failure is caused by inconsistency between the keys of the OLT and the ONU, and then the operation and maintenance personnel initiate a flow of detecting the consistency between the current keys of the OLT and the ONU from the network element management system, and the flow comprises the following steps:

301: The operation and maintenance personnel manually initiate the detection of the consistency between the current keys of the OLT and the ONU from the network element management system;

302: The OLT sends a Request_Current_Key message to the ONU for three times and waits for Current_Encryption_Key messages returned by the ONU;

303: If the ONU receives the Request_Current_Key message from the OLT, it divides the key in the active_key register into two fragments and sends messages carrying the fragments to the OLT according to the format of the Current_Encryption_Key message;

304: The OLT inquires whether the Current_Encryption_Key messages from the ONU are received in a predetermined period, and if they are not received, proceeds to step 305, while if they are received, proceeds to step 306;

305: The OLT notifies the network element management system of a failure in the current key consistency detection; and the flow ends;

306: The OLT acquires the current key of the ONU from the Current_Encryption_Key messages and compares it with the current key stored locally;

307: Compare the two keys and determine whether they are consistent, and if they are consistent, proceed to step 308, while if they are inconsistent, proceed to step 309;

308: The OLT notifies the network element management system that its current key is consistent with that of the ONU; and the flow ends;

309: The OLT notifies the network element management system that its current key is inconsistent with that of the ONU; and flow ends.

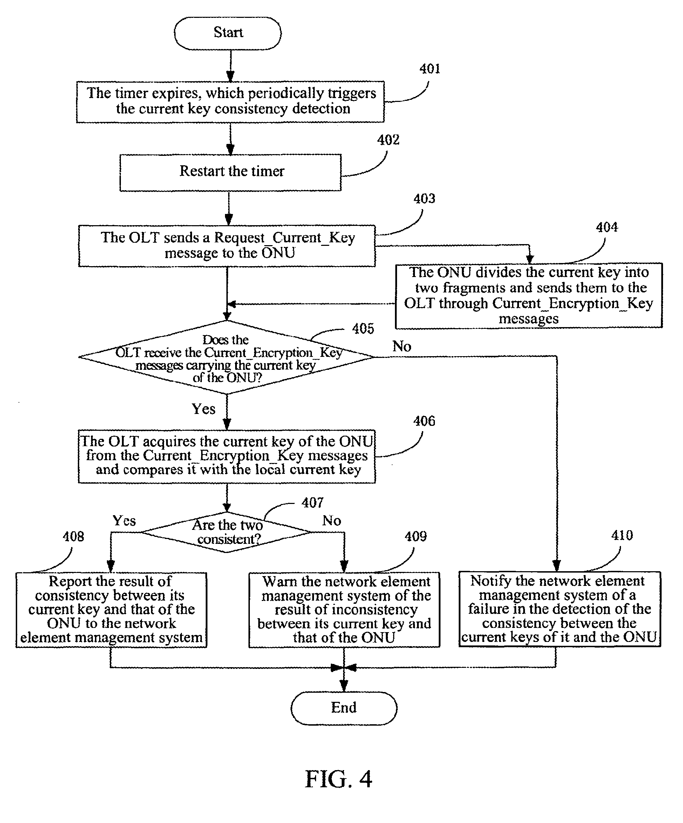

FIG. 4 shows a flow of detecting the consistency between the current keys of an OLT and an ONU initiated by the OLT periodically, and the flow comprises the following steps:

401: A timer expires, which periodically triggers the detection of the consistency between the current keys of the OLT and the ONU;

402: Restart the timer to prepare for the next detection timing;

403: The OLT sends a Request_Current_Key message to the ONU for three times and waits for Current_Encryption_Key messages returned by the ONU;

404: If the ONU receives the Request_Current_Key message from the OLT, it divides the key in the active_key register into two fragments, and sends messages to the OLT according to the format of the Current_Encryption_Key message;

405: The OLT inquires whether the Current_Encryption_Key messages from the ONU are received in a predetermined period, and if they are received, proceeds to step 406, while if they are not received, proceeds to step 410;

406: The OLT acquires the current key of the ONU from the Current_Encryption_Key messages, and compares it with the current key stored locally;

407: Compare the two keys and determine whether they are consistent, and if they are consistent, proceed to step 408, while if they are inconsistent, proceed to step 409;

408: The OLT notifies the network element management system that its current key is consistent with that of the ONU; and the flow ends;

409: The OLT notifies the network element management system that its current key is inconsistent with that of the ONU; and the flow ends.

410: The OLT notifies the network element management system of a failure in the current key consistency detection; and the flow ends.

### The second embodiment

The technical scheme of this embodiment is substantially identical to the flow of the first embodiment; the only difference is that the object of comparison in the key consistency detection is different, and in this embodiment, the object of comparison in the key consistency detection is the current key index.

This is because every time an ONU generates a new key, it will generate a corresponding key index as well, and will send the new key and the key index simultaneously to an OLT. The length of a key index is one byte, and the rule for an ONU to generate a key index is that the key index is added by 1 every time a new key is generated, and returns to 0 if it is beyond 255, and during 256 consecutive key switch-overs, the key index corresponds to the current key uniquely, and the possibility for consecutive occurrence of 256 key switch-over exceptions in a GPON system is tiny. Therefore, the detection of the consistency between the keys of the two can be achieved by detecting and comparing the key indices of the two and determining whether they are consistent.

Accordingly, the format of a current key index request message sent by an OLT to an ONU is shown in Table 3.

**Table 3**

| Current key index request message, Request_Current_KeyIndex | | |
|---|---|---|
| Byte | Content | Semantic interpretation |
| 1 | ONU-ID | ONU identification, used to identify the target ONU to which the message is sent |
| 2 | 00010110 | Message identification, used to indicate that it is a Request_Current_KeyIndex message |
| 3-12 | Reserved | |

The message identification in Table 3 is used to indicate to the ONU that the request object of the message is the current key index. The format of a current key index response message returned by the ONU to the OLT is shown in Table 4.

**Table 4**

| Current key index response message, Current_Encryption_KeyIndex | | |
|---|---|---|
| Byte | Content | Semantic interpretation |
| 1 | ONU-ID | ONU identification, used to identify the source ONU from which the message is sent |
| 2 | 00001011 | Message identification, used to indicate that it is a Current_Encryption_KeyIndex message |
| 3 | IndexBYTE | Key index byte, i.e., the byte of the current key index |
| 4-12 | Reserved | |

The message identification in Table 4 is used to indicate to the OLT that the response object of the message is the current key index. The content of Byte 3 (IndexBYTE) is accordingly referred to as current key index body data, i.e., the current key index.

The OLT acquires the current key index of the ONU from the response message and compares it with the current key index stored locally in the OLT, and if the comparison result is that the current key index of the ONU is inconsistent with the current key index stored locally in the OLT, the OLT initiates the processing corresponding to the inconsistency with the current key of the ONU.

The flow chart of the method in accordance with the present invention shown in FIG. 1 comprises the situation of this embodiment, and the conditions that trigger the execution of the flow of this embodiment are the same as those in the first embodiment, thus they are not repeated here.

### The third embodiment

The technical scheme of this embodiment differs from the flows of the first and second embodiments also in the object of comparison in the key consistency detection, and the object of comparison in the key consistency detection in this embodiment is the key switch-over frame number.

Since there is no stipulation in regard to selection of the key switch-over frame number in G.984.x standard, this embodiment makes some restrictions for selecting the key switch-over frame number: the frame number has a length of 4 bytes, an OLT stores N consecutive historical key switch-over frame numbers, and the key switch-over frame number determined by the OLT must be different from the N historical key switch-over frame numbers, and the value range of N is 0~0xffffffff. According to the rule for selecting the key switch-over frame number, if N is 256, the result similar to that of the key index can be achieved, and in a GPON system, the possibility for consecutive occurrence of N = 256 key switch-over exceptions is tiny, and expanding the value range of N can further decrease the possibility for N consecutive key switch-over exceptions. Therefore, the detection of the consistency between the keys of the two can be achieved by detecting and comparing the key switch-over frame numbers of the two and determining whether they are consistent.

Accordingly, the format of a key switch-over frame number request message sent by an OLT to an ONU and the format of a key switch-over frame number response message returned by the ONU to the OLT are respectively shown in Table 5 and Table 6.

**Table 5**

| Key switch-over frame number request message, Request_Current_ReFrameNum | | |
|---|---|---|
| Byte | Content | Semantic interpretation |
| 1 | ONU-ID | ONU identification, used to identify the target ONU to which the message is sent |
| 2 | 00010111 | Message identification, used to indicate that it is a Request_Current_ReFrameNum message |
| 3-12 | Reserved | |

The message identification in Table 5 is used to indicate to the ONU that the request object of the message is the key switch-over frame number.

**Table 6**

| Key switch-over frame number response message, Current_Encryption_ReFrameNum | | |
|---|---|---|
| Byte | Content | Semantic interpretation |
| 1 | ONU-ID | ONU identification, used to identify the source ONU from which the message is sent |
| 2 | 00001100 | Message identification, used to indicate that it is a Current_Encryption_ReFrameNum message |
| 3 | NumBYTE0 | Byte 0 of the key switch-over frame number, i.e., the first byte of the key switch-over frame number |
| 4 | NumBYTE1 | Byte 1 of the key switch-over frame number, i.e., the second byte of the key switch-over frame number |
| 5 | NumBYTE2 | Byte 2 of the key switch-over frame number, i.e., the third byte of the key switch-over frame number |
| 6 | NumBYTE3 | Byte 3 of the key switch-over frame number, i.e., the fourth byte of the key switch-over frame number |
| 7~12 | Reserved | |

The message identification in Table 6 is used to indicate to the OLT that the response object of the message is the key switch-over frame number. The content in Bytes 3-6 is accordingly the key switch-over frame number body data, i.e., the key switch-over frame number.

The OLT acquires the key switch-over frame number of the ONU from the response message, and compares it with the key switch-over frame number stored locally in the OLT, and if the comparison result is that the key switch-over frame number of the ONU is inconsistent with the key switch-over frame number stored locally in the OLT, the OLT initiates the processing corresponding to the inconsistency with the current key of the ONU.

The flow chart of the method in accordance with the present invention shown in FIG. 1 comprises the situation of this embodiment, and the conditions that trigger the execution of the flow of this embodiment are the same as those in the first embodiment, thus they are not repeated here.

From the description of the above embodiments and examples, it can be seen that the present invention triggers the detection of the consistency between the keys of an OLT and an ONU in various ways and with various methods so that the latent inconsistency between the current keys of the OLT and the ONU in a GPON can be timely discovered, and notifies the network element management system that corresponding processing should be performed to guarantee that the data sent by the OLT can be reliably and correctly decrypted by the ONU, thereby, the risk of exception occurrence due to the inconsistency between the current keys of the OLT and the ONU in a GPON service can be reduced or avoided.

The above description is just preferred embodiments of the present invention, and is not used to limit the present invention.

### Industrial Applicability

The present invention can fill a gap of the G. 984.x standard in regard to the detection of the consistency between the current keys of an OLT and an ONU in the stage of key switch-over in a GPON, and proposes a standard method for rapid development of an optical network into a gigabit passive optical network.

## Claims

1. A method for detecting keys in a gigabit passive optical network, used for detecting consistency between current keys of an optical line terminal and an optical network unit in a gigabit passive optical network system; wherein said method comprises the following steps of:
(a) said optical line terminal sending a current key information request message to said optical network unit, and waiting for the optical network unit to return a current key information response message (102);
(b) if said optical network unit receives said current key information request message, reading current key information stored locally in said optical network unit, and loading read content into said current key information response message and sending the response message to said optical line terminal (103);
(c) if said optical line terminal receives said current key information response message in a predetermined period, acquiring the current key information of said optical network unit from said response message, and comparing the current key information of said optical network unit with current key information stored locally in said optical line terminal (106), and according to a result of the comparison, performing corresponding processing (107).

2. The method of claim 1, wherein,
said current key information request message in step (a) comprises: a target optical network unit identification and a target message identification; wherein, said target optical network unit identification is used to represent a target optical network unit to which said current key information request message is sent; said target message identification is used to indicate to said target optical network unit that said request message is a request for said current key information;
said current key information response message in step (c) comprises: a source optical network unit identification, a source message identification and current key information body data; wherein, said source optical network unit identification is used to represent a source optical network unit from which said current key information response message is sent; said source message identification is used to indicate to said optical line terminal that said response message is a response to said current key information request message; said current key information body data is used by said optical line terminal to acquire a current key information body of said optical network unit from said response message.

3. The method of claim 2, further comprising:
said current key information being a current key; said current key information response message being current key response messages, and said current key information body data being current key body data; said current key body data further comprising current key fragment indices and current key bodies, and in step (c), according to said current key fragment indices, said optical line terminal splicing multiple fragments of said current key bodies in multiple current key response messages in sequence into a complete current key of said optical network unit.

4. The method of claim 3, further comprising:
in step (a), said optical line terminal sending a current key request message to said optical network unit; in step (b), if said optical network unit receives said current key request message, reading the current key stored locally in said optical network unit, dividing read content into fragments, loading the fragments into multiple current key response messages and sending the response messages in sequence to said optical line terminal; in step (c), if said result of the comparison is that the current key of said optical network unit is consistent with the current key stored locally in said optical line terminal, said optical line terminal performing processing corresponding to consistency of said current keys; if said result of the comparison is that the current key of said optical network unit is inconsistent with the current key stored locally in said optical line terminal, said optical line terminal performing processing corresponding to inconsistency of said current keys.

5. The method of claim 4, wherein, during a key switch-over process, if said optical line terminal does not receive an acknowledgement message sent by said optical network unit when a key switch-over frame number arrives (201), implementation of said step (a) is started by said optical line terminal; in step (c), the processing corresponding to the consistency of said current keys is: said optical line terminal sending information of a success in the key switch-over with said optical network unit (208); or the processing corresponding to the inconsistency of said current keys performed by said optical line terminal is: said optical line terminal sending information of a failure in the key switch-over with said optical network unit (206).

6. The method of claim 4, wherein, in order to locate a reason for a service failure in said gigabyte passive optical network, equipment maintenance personnel manually start implementation of said step (a) from a network element management system (301); in step (c), the processing corresponding to the consistency of said current keys is: said optical line terminal notifying the network element management system of the consistency between the current keys of said optical line terminal and said optical network unit (308); or the processing corresponding to the inconsistency of said current keys is: said optical line terminal notifying the network element management system of the inconsistency between the current keys of said optical line terminal and said optical network unit (309).

7. The method of claim 4, wherein, implementation of said step (a) is started by said optical line terminal at definite time; in step (c), the processing corresponding to the consistency of said current keys is: said optical line terminal notifying a network element management system that the current keys of said optical line terminal and said optical network unit are consistent (408); or the processing corresponding to the inconsistency of said current keys is: said optical line terminal notifying the network element management system that the current keys of said optical line terminal and said optical network unit are inconsistent (409).

8. The method of claim 4, further comprising:
in step (c), if said optical line terminal does not receive said current key response messages in the predetermined period, sending information of a failure in detecting the consistency between the current keys.

9. The method of claim 2, further comprising:
said current key information being a current key index; said current key information response message being a current key index response message, and said current key information body data being current key index body data; in step (a), said optical line terminal sending a current key index request message to said optical network unit; in step (b), if said optical network unit receives said current key index request message, reading the current key index stored locally in said optical network unit, loading read content as said current key index body data into said current key index response message, and sending the response message to said optical line terminal; in step (c), said optical line terminal acquiring said current key index body data as the current key index of said optical network unit; if said result of the comparison is that the current key index of said optical network unit is consistent with the current key index stored locally in said optical line terminal, said optical line terminal performing processing corresponding to consistency of said current keys; if said result of the comparison is that the current key index of said optical network unit is inconsistent with the current key index stored locally in said optical line terminal, said optical line terminal performing processing corresponding to inconsistency of said current keys.

10. The method of claim 9, further comprising:
in step (c), if said optical line terminal does not receive said current key index response messages in the predetermined period, sending information of a failure in detecting the consistency between the current keys.

11. The method of claim 2, further comprising:
said current key information being a key switch-over frame number; in step (a), said optical line terminal sending a key switch-over frame number request message to said optical network unit; in step (b), if said optical network unit receives said key switch-over frame number request message, reading the key switch-over frame number stored locally in said optical network unit, loading read content as key switch-over frame number body data into a key switch-over frame number response message, and sending the response message to said optical line terminal; in step (c), said optical line terminal acquiring said key switch-over frame number body data as the key switch-over frame number of said optical network unit; if said result of the comparison is that the key switch-over frame number of said optical network unit is consistent with the key switch-over frame number stored locally in said optical line terminal, said optical line terminal performing processing corresponding to consistency of said current keys; if said result of the comparison is that the key switch-over frame number of said optical network unit is inconsistent with the key switch-over frame number stored locally in said optical line terminal, said optical line terminal performing processing corresponding to inconsistency of said current keys.

12. The method of claim 11, further comprising:
in step (c), if said optical line terminal does not receive said key switch-over frame number response messages in the predetermined period, sending information of a failure in detecting the consistency between the current keys.

## Patentansprüche

1. Verfahren zum Detektieren von Schlüsseln in einem passiven optischen Gigabit-Netzwerk, das zum Detektieren einer Übereinstimmung zwischen aktuellen Schlüsseln eines Glasfaser-Endgeräts und einer optischen Netzwerkeinheit in einem passiven optischen Gigabit-Netzwerksystem verwendet wird;
wobei das Verfahren die folgenden Schritte aufweist:
(a) Senden, durch das Glasfaser-Endgerät, einer Informationsanfragenachricht bezüglich des aktuellen Schlüssels zur optischen Netzwerkeinheit und Warten, dass die optische Netzwerkeinheit eine Informationsantwortnachricht bezüglich des aktuellen Schlüssels zurücksendet (102);
(b) wenn die optische Netzwerkeinheit die Informationsanfragenachricht bezüglich des aktuellen Schlüssels erhält, Lesen von Informationen bezüglich des aktuellen Schlüssels, die örtlich in der optischen Netzwerkeinheit gespeichert sind, und Laden des gelesenen Inhalts in die Informationsantwortnachricht bezüglich des aktuellen Schlüssels und Senden der Antwortnachricht zum Glasfaser-Endgerät (103) ;
(c) wenn das Glasfaser-Endgerät die Informationsantwortnachricht bezüglich des aktuellen Schlüssels in einer vorgegebenen Periode empfängt, Gewinnen der Informationen bezüglich des aktuellen Schlüssels der optischen Netzwerkeinheit aus der Antwortnachricht und Vergleichen der Informationen bezüglich des aktuellen Schlüssels der optischen Netzwerkeinheit mit Informationen bezüglich des aktuellen Schlüssels, die örtlich im Glasfaser-Endgerät gespeichert sind (106), und in Übereinstimmung mit einem Ergebnis des Vergleichs, Durchführen einer entsprechenden Verarbeitung (107).

2. Verfahren nach Anspruch 1, wobei
die Informationsanfragenachricht bezüglich des aktuellen Schlüssels in Schritt (a) aufweist: eine Identifizierung der optischen Zielnetzwerkeinheit und eine Zielnachrichtenidentifizierung; wobei die Identifizierung der optischen Zielnetzwerkeinheit zur Darstellung einer optischen Zielnetzwerkeinheit verwendet wird, an welche die Informationsanfragenachricht bezüglich des aktuellen Schlüssels gesendet wird; wobei die Zielnachrichtenidentifizierung verwendet wird, um der optischen Zielnetzwerkeinheit anzuzeigen, dass die Anfragenachricht eine Anfrage nach Informationen bezüglich des aktuellen Schlüssels ist;
die Informationsantwortnachricht bezüglich des aktuellen Schlüssels in Schritt (c) aufweist: eine Identifizierung der optischen Quellennetzwerkeinheit, eine Quellennachrichtidentifizierung und einen Informationsdatensatz des aktuellen Schlüssels; wobei die Identifizierung der optischen Quellennetzwerkeinheit zur Darstellung einer optischen Quellennetzwerkeinheit verwendet wird, von welcher die Informationsantwortnachricht bezüglich des aktuellen Schlüssels gesendet wird; wobei die Quellennachrichtidentifizierung verwendet wird, dem Glasfaser-Endgerät anzuzeigen, dass die Antwortnachricht eine Antwort auf die Informationsanfragenachricht bezüglich des aktuellen Schlüssels ist; wobei der Informationsdatensatz des aktuellen Schlüssels vom Glasfaser-Endgerät zum Gewinnen eines Informationssatz bezüglich des aktuellen Schlüssels der optischen Netzwerkeinheit aus der Antwortnachricht verwendet wird.

3. Verfahren nach Anspruch 2, des Weiteren aufweisend:
dass die Informationen bezüglich des aktuellen Schlüssels ein aktueller Schlüssel sind; die Informationsantwortnachricht bezüglich des aktuellen Schlüssels Antwortnachrichten bezüglich des aktuellen Schlüssels darstellt und der Informationsdatensatz des aktuellen Schlüssels ein Datensatz des aktuellen Schlüssels ist; wobei der Datensatz des aktuellen Schlüssels ferner Fragmentindizes des aktuellen Schlüssels und aktuelle Schlüsselsätze aufweist, und in Schritt (c) gemäß den Fragmentindizes des aktuellen Schlüssels das Glasfaser-Endgerät mehrere Fragmente der aktuellen Schlüsselsätze in mehrere Antwortnachrichten bezüglich des aktuellen Schlüssels der Reihe nach zu einem vollständigen aktuellen Schlüssel der optischen Netzwerkeinheit aufteilt.

4. Verfahren nach Anspruch 3, des Weiteren aufweisend:
in Schritt (a), Senden, durch das Glasfaser-Endgerät, einer Anfragenachricht bezüglich des aktuellen Schlüssels zur optischen Netzwerkeinheit; in Schritt (b), wenn die optische Netzwerkeinheit die Anfragenachricht bezüglich des aktuellen Schlüssels empfängt, Lesen des aktuellen Schlüssels, der örtlich in der optischen Netzwerkeinheit gespeichert ist, Teilen des gelesenen Inhalts in Fragmente, Laden der Fragmente in mehrere Antwortnachrichten bezüglich des aktuellen Schlüssels und Senden der Antwortnachrichten der Reihe nach zum Glasfaser-Endgerät; in Schritt (c), wenn das Ergebnis des Vergleichs ist, dass der aktuelle Schlüssel der optischen Netzwerkeinheit mit dem aktuellen Schlüssel übereinstimmt, der örtlich in dem Glasfaser-Endgerät gespeichert ist, Durchführen einer Verarbeitung am Glasfaser-Endgerät entsprechend der Übereinstimmung der aktuellen Schlüssel; wenn das Ergebnis des Vergleichs ist, dass der aktuelle Schlüssel der optischen Netzwerkeinheit nicht mit dem aktuellen Schlüssel übereinstimmt, der örtlich in dem Glasfaser-Endgerät gespeichert ist, Durchführen einer Verarbeitung am Glasfaser-Endgerät, die einer Nichtübereinstimmung der aktuellen Schlüssel entspricht.

5. Verfahren nach Anspruch 4, wobei während eines Schlüsselübergabeprozesses, wenn das Glasfaser-Endgerät keine Bestätigungsnachricht empfängt, die von der optischen Netzwerkeinheit gesendet wird, wenn eine Schlüsselübergabe-Rahmennummer eintrifft (201), ein Implementieren des Schritts (a) vom Glasfaser-Endgerät gestartet wird; wobei in Schritt (c) die Verarbeitung entsprechend der Übereinstimmung der aktuellen Schlüssel ist: Senden, durch das Glasfaser-Endgerät, von Informationen bezüglich einer erfolgreichen Schlüsselübergabe mit der optischen Netzwerkeinheit (208), oder die Verarbeitung entsprechend der Nichtübereinstimmung der aktuellen Schlüssel, die vom Glasfaser-Endgerät durchgeführt wird, ist: Senden, durch das Glasfaser-Endgerät, von Informationen bezüglich einer misslungenen Schlüsselübergabe mit der optischen Netzwerkeinheit (206).

6. Verfahren nach Anspruch 4, wobei zur Ermittlung eines Grundes für ein Misslingen eines Dienstes in dem passiven optischen Gigabyte-Netzwerk ein Gerätewartungspersonal manuell eine Implementierung von Schritt (a) von einem Netzwerkelement-Verwaltungssystem aus startet (301); in Schritt (c) die Verarbeitung entsprechend der Übereinstimmung der aktuellen Schlüssel ist: Benachrichtigung, durch das Glasfaser-Endgerät, des Netzwerkelement-Verwaltungssystems über die Übereinstimmung zwischen den aktuellen Schlüsseln des Glasfaser-Endgeräts und der optischen Netzwerkeinheit (308); oder die Verarbeitung entsprechend einer Nichtübereinstimmung der aktuellen Schlüssel ist: Benachrichtigung, durch das Glasfaser-Endgerät, des Netzwerkelement-Verwaltungssystems über die Nichtübereinstimmung zwischen den aktuellen Schlüsseln des Glasfaser-Endgeräts und der optischen Netzwerkeinheit (309).

7. Verfahren nach Anspruch 4, wobei ein Implementieren von Schritt (a) von dem Glasfaser-Endgerät zu einem festgesetzten 2eitpunkt gestartet wird; in Schritt (c) die Verarbeitung entsprechend der Übereinstimmung der aktuellen Schlüssel ist: Benachrichtigung, durch das Glasfaser-Endgerät, eines Netzwerkelement-Verwaltungssystems, dass die aktuellen Schlüssel des Glasfaser-Endgeräts und der optischen Netzwerkeinheit übereinstimmen (408); oder die Verarbeitung entsprechend einer Nichtübereinstimmung der aktuellen Schlüssel ist: Benachrichtigung, durch das Glasfaser-Endgerät, des Netzwerkelement-Verwaltungssystems, dass die aktuellen Schlüssel des Glasfaser-Endgeräts und der optischen Netzwerkeinheit nicht übereinstimmen (409).

8. Verfahren nach Anspruch 4, des Weiteren aufweisend:
in Schritt (c), wenn das Glasfaser-Endgerät die Antwortnachrichten bezüglich des aktuellen Schlüssels nicht in der vorgegebenen Periode empfängt, Senden von Informationen bezüglich eines Misslingens beim Detektieren der Übereinstimmung zwischen den aktuellen Schlüsseln.

9. Verfahren nach Anspruch 2, des Weiteren aufweisend:
dass die Informationen bezüglichen des aktuellen Schlüssels ein aktueller Schlüsselindex sind; die Informationsantwortnachricht bezüglich des aktuellen Schlüssels eine Antwortnachricht bezüglich des aktuellen Schlüsselindexes ist und der Informationsdatensatz des aktuellen Schlüssels ein Datensatz des aktuellen Schlüsselindexes ist; in Schritt (a) Senden, durch das Glasfaser-Endgerät einer Anfragenachricht bezüglich des aktuellen Schlüsselindexes zur optischen Netzwerkeinheit; in Schritt (b), wenn die optische Netzwerkeinheit die Anfragenachricht bezüglich des aktuellen Schlüsselindexes empfängt, Lesen des aktuellen Schlüsselindexes, der örtlich in der optischen Netzwerkeinheit gespeichert ist, Laden des gelesenen Inhalts als Indexdatensatz des aktuellen Schlüssels in die Antwortnachricht bezüglich des aktuellen Schlüsselindexes und Senden der Antwortnachricht zum Glasfaser-Endgerät; in Schritt (c) Gewinnen, durch das Glasfaser-Endgerät, des Indexdatensatzes des aktuellen Schlüssels als aktuellen Schlüsselindex der optischen Netzwerkeinheit; wenn das Ergebnis des Vergleichs ist, dass der aktuelle Schlüsselindex der optischen Netzwerkeinheit mit dem aktuellen Schlüsselindex übereinstimmt, der örtlich in dem Glasfaser-Endgerät gespeichert ist, Durchführen, durch das Glasfaser-Endgerät, einer Verarbeitung entsprechend der Übereinstimmung der aktuellen Schlüssel; wenn das Ergebnis des Vergleichs ist, dass der aktuelle Schlüsselindex der optischen Netzwerkeinheit nicht mit dem aktuellen Schlüsselindex übereinstimmt, der örtlich in dem Glasfaser-Endgerät gespeichert ist, Durchführen, durch das Glasfaser-Endgerät, einer Verarbeitung entsprechend der Nichtübereinstimmung der aktuellen Schlüssel.

10. Verfahren nach Anspruch 9, des Weiteren aufweisend:
in Schritt (c), wenn das Glasfaser-Endgerät die Antwortnachrichten bezüglich des aktuellen Schlüsselindexes nicht in der vorgegebenen Periode empfängt, Senden von Informationen bezüglich eines Misslingens beim Detektieren der Übereinstimmung zwischen den aktuellen Schlüsseln.

11. Verfahren nach Anspruch 2, des Weiteren aufweisend:
dass die Informationen bezüglich des aktuellen Schlüssels eine Schlüsselübergabe-Rahmennummer sind; in Schritt (a) Senden, durch das Glasfaser-Endgerät, einer Anfragenachricht bezüglich der Schlüsselübergabe-Rahmennummer zur optischen Netzwerkeinheit; in Schritt (b), wenn die optische Netzwerkeinheit die Anfragenachricht bezüglich der Schlüsselübergabe-Rahmennummer empfängt, Lesen der Schlüsselübergabe-Rahmennummer, die örtlich in der optischen Netzwerkeinheit gespeichert ist, Laden des gelesenen Inhalts als Schlüsselübergabe-Rahmennummerdatensatz in eine Antwortnachricht bezüglich der Schlüsselübergabe-Rahmennummer und Senden der Antwortnachricht zum Glasfaser-Endgerät; in Schritt (c), Gewinnen, durch das Glasfaser-Endgerät, des Schlüsselübergabe-Rahmennummerdatensatzes als Schlüsselübergabe-Rahmennummer der optischen Netzwerkeinheit; wenn das Ergebnis des Vergleichs ist, dass die Schlüsselübergabe-Rahmennummer der optischen Netzwerkeinheit mit der Schlüsselübergabe-Rahmennummer übereinstimmt, die örtlich in dem Glasfaser-Endgerät gespeichert ist, Durchführen, durch das Glasfaser-Endgerät, einer Verarbeitung entsprechend der Übereinstimmung der aktuellen Schlüssel; wenn das Ergebnis des Vergleichs ist, dass die Schlüsselübergabe-Rahmennummer der optischen Netzwerkeinheit nicht mit der Schlüsselübergabe-Rahmennummer übereinstimmt, die örtlich in dem Glasfaser-Endgerät gespeichert ist, Durchführen, durch das Glasfaser-Endgerät, einer Verarbeitung entsprechend der Nichtübereinstimmung der aktuellen Schlüssel.

12. Verfahren nach Anspruch 11, des Weiteren aufweisend:
in Schritt (c), wenn das Glasfaser-Endgerät die Antwortnachrichten bezüglich der Schlüsselübergabe-Rahmennummer nicht in der vorgegebenen Periode empfängt, Senden von Informationen bezüglich eines Misslingens beim Detektieren der Übereinstimmung zwischen den aktuellen Schlüsseln.

## Revendications

1. Procédé de détection de clés dans un réseau optique passif gigabit, utilisé pour détecter la cohérence existant entre des clés courantes d'un terminal optique en ligne et d'une unité de réseau optique dans un système de réseau optique passif gigabit,
dans lequel ledit procédé comprend les étapes suivantes :
(a) le terminal optique en ligne envoie un message de demande d'informations sur une clé courante à ladite unité de réseau optique, et il attend que l'unité de réseau optique lui renvoie un message de réponse d'informations sur la clé courante (102),
(b) si ladite unité de réseau optique reçoit ledit message de demande d'informations sur la clé courante, il y a lecture des informations sur la clé courante mémorisées localement dans ladite unité de réseau optique, et chargement dudit contenu lu dans ledit message de réponse d'informations sur la clé courante ainsi qu'envoi du message de réponse au dit terminal optique en ligne (103),
(c) si ledit terminal optique en ligne reçoit ledit message de réponse d'informations sur la clé courante dans un intervalle de temps prédéterminé, il y a acquisition des informations sur la clé courante de ladite unité de réseau optique à partir dudit message de réponse et comparaison des informations sur la clé courante de ladite unité de réseau optique avec des informations sur la clé courante mémorisées localement dans ledit terminal optique en ligne (106), et en fonction du résultat de la comparaison, il y a exécution du traitement correspondant (107).

2. Procédé selon la revendication 1, dans lequel
ledit message d'informations sur la clé courante à l'étape (a) comprend : une identification de l'unité de réseau optique cible et une identification de message cible, ladite identification de l'unité de réseau optique cible étant utilisée pour représenter une unité de réseau optique cible à laquelle est envoyé ledit message de demande d'informations sur la clé courante, ladite identification de message cible étant utilisée pour indiquer à ladite unité de réseau optique cible que ledit message de demande représente une demande pour lesdites informations sur la clé courante,
ledit message de réponse d'informations sur la clé courante à l'étape (c) comprend : une identification d'unité de réseau optique source, une identification du message source et de données d'un corps d'informations sur la clé courante, ladite identification de l'unité de réseau optique source étant utilisée pour représenter une unité de réseau optique source à partir de laquelle est envoyé ledit message d'informations sur la clé courante, ladite identification de message source étant utilisée pour indiquer au dit terminal optique en ligne que ledit message de réponse représente une réponse au dit message de demande d'informations sur la clé courante, lesdites données de corps d'informations sur la clé courante sont utilisées par ledit terminal optique en ligne pour acquérir un corps d'informations sur la clé courante de ladite unité de réseau optique à partir dudit message de réponse.

3. Procédé selon la revendication 2, comprenant en outre :
le fait que lesdites informations sur la clé courante représentent une clé courante, ledit message de réponse d'informations sur la clé courante représentant des messages de réponse sur la clé courante, et lesdites données de corps d'informations sur la clé courante représentant des données de corps sur la clé courante, lesdites données de corps sur la clé courante comprenant en outre des indices de fragments sur la clé courante et des corps de clé courante, et à l'étape (c), en fonction desdits indices de fragments sur la clé courante, ledit terminal optique en ligne raccorde les multiples fragments desdits corps sur la clé courante se trouvant dans les multiples messages réponse sur la clé courante, en séquence, en une clé courante complète de ladite unité de réseau optique.

4. Procédé selon la revendication 3, comprenant en outre :
à l'étape (a), ledit terminal optique en ligne envoie un message de demande sur la clé courante à ladite unité de réseau optique ; à l'étape (b), si ladite unité de réseau optique reçoit ledit message de demande sur la clé courante, il y a lecture de la clé courante mémorisée localement dans ladite unité de réseau optique, la division du contenu lu en fragments, le chargement des fréquences en de multiples messages de réponse sur la clé courante, et envoi des messages réponse en séquence vers ledit terminal optique en ligne ; à l'étape (c), si ledit résultat de la comparaison est que la clé courante de ladite unité de réseau optique est cohérente avec la clé courante mémorisée localement dans ledit terminal optique en ligne, ledit terminal optique en ligne exécute le traitement correspondant à la cohérence desdites clés courantes ; si ledit résultat de la comparaison est que la clé courante de ladite unité de réseau optique est incohérente avec la clé courante mémorisée localement dans ledit terminal optique en ligne, ledit terminal optique exécute le traitement correspondant à l'incohérence desdites clés courantes.

5. Procédé selon la revendication 4, dans lequel, pendant un traitement de commutation de clé, si ledit terminal optique en ligne ne reçoit pas de message d'accusé de réception envoyé par ladite unité de réseau optique lorsqu'un numéro de trame de commutation de clé arrive (201), la mise en oeuvre de ladite étape (a) est démarrée par ledit terminal optique en ligne ; à l'étape (c), le traitement correspondant à la cohérence desdites clés courantes est que ledit terminal optique en ligne envoie des informations sur le succès de la commutation de clé avec ladite unité de réseau optique (208) ; ou bien le traitement correspondant à l'incohérence desdites clés courantes effectué par ledit terminal optique en ligne est que ledit terminal optique en ligne envoie des informations d'échec de la commutation de clé avec ladite unité de réseau optique (206).

6. Procédé selon la revendication 4, dans lequel, dans le but de localiser la raison d'une défaillance de service dans ledit réseau optique passif gigabit, le personnel de maintenance de l'équipement démarre manuellement la mise en oeuvre de ladite étape (a) à partir d'un système de gestion d'éléments de réseau (301) ; à l'étape (c), le traitement correspondant à la cohérences desdites clés courantes est que ledit terminal optique en ligne signale au système de gestion d'éléments de réseau la cohérence existant entre les clés courantes dudit terminal optique en ligne et de ladite unité de réseau optique (308); ou bien le traitement correspondant à l'incohérence desdites clés courantes est que ledit terminal optique en ligne signal au système de gestion d'éléments de réseau l'incohérence existant entre les clés courantes dudit terminal optique en ligne et de ladite unité de réseau optique (309).

7. Procédé selon la revendication 4, dans lequel la mise en oeuvre de ladite étape (a) est démarrée par ledit terminal optique en ligne à un instant défini ; à l'étape (c), le traitement correspondant à la cohérence desdites clés courantes est que ledit terminal optique en ligne signale au système de gestion d'éléments de réseau que les clés courantes dudit terminal optique en ligne et de ladite unité de réseau optique sont cohérentes (408) ; ou bien le traitement correspondant à l'incohérence desdites clés courantes est que ledit terminal optique en ligne signale au système de gestion d'éléments de réseau que les clés courantes dudit terminal optique en ligne et de ladite unité de réseau optique sont incohérentes (409).

8. Procédé selon la revendication 4, comprenant en outre :
à l'étape (c), si ledit terminal optique en ligne ne reçoit pas lesdits messages de réponse sur la clé courante dans l'intervalle de temps prédéterminé, il y a envoi d'informations concernant l'échec de la détection de cohérence existant entre les clés courantes.

9. Procédé selon la revendication 2, comprenant en outre :
lorsque lesdites informations sur la clé courante représentent un index de clé courante ; ledit message de réponse d'informations sur la clé courante représente un message de réponse d'index de clé courante et lesdites données de corps d'informations sur la clé courante représentent des données de corps d'index de clé courante ; à l'étape (a), ledit terminal optique en ligne envoie un message de demande d'index de clé courante à ladite unité de réseau optique ; à l'étape (b), si ladite unité de réseau optique reçoit ledit message de demande d'index de clé courante, il y a lecture de l'index de clé courante mémorisé localement dans ladite unité de réseau optique, chargement du contenu lu en tant que données de corps d'index de clé courante dans ledit message de réponse d'index de clé courante, et envoi du message de réponse au dit terminal optique en ligne ; à l'étape (c), ledit terminal optique en ligne acquiert lesdites données de corps d'index de clé courante en tant qu'index de clé courante de ladite unité de réseau optique ; si ledit résultat de comparaison est que l'index de clé courante de ladite unité de réseau optique est cohérent avec l'index de clé courante mémorisé localement dans ledit terminal optique en ligne, ledit terminal optique en ligne exécute le traitement correspondant à la cohérence desdites clés courantes ; si ledit résultat de la comparaison est que l'index de clé courante de ladite unité de réseau optique est incohérent avec l'index de clé courante mémorisé localement dans ledit terminal optique en ligne, ledit terminal optique en ligne exécute le traitement correspondant à l'incohérence desdites clés courantes.

10. Procédé selon la revendication 9, comprenant en outre :
à l'étape (c), si ledit terminal optique en ligne ne reçoit pas lesdits messages de réponse sur l'index de clé courante dans l'intervalle de temps prédéterminé, il y a envoi d'informations concernant l'échec de la détection de cohérence existant entre les clés courantes.

11. Procédé selon la revendication 2, comprenant en outre :
lorsque lesdites informations sur la clé courante représentent un numéro de trame de commutation de clé ; à l'étape (a) ledit terminal optique en ligne envoie un message de demande de numéro de trame de commutation de clé à ladite unité de réseau optique ; à l'étape (b), si ladite unité de réseau optique reçoit ledit message de demande de numéro de trame de commutation de clé, il y a lecture du numéro de trame de commutation de clé mémorisé localement dans ladite unité de réseau optique, chargement du contenu lu en tant que données de corps de numéro de trame de commutation de clé dans un message de réponse de numéro de trame de commutation de clé et envoi du message de réponse au dit terminal optique en ligne ; à l'étape (c), ledit terminal optique en ligne acquiert lesdites données de corps de numéro de trame de commutation de clé en tant que numéro de trame de commutation de clé de ladite unité de réseau optique ; si ledit résultat de la comparaison est que le numéro de trame de commutation de clé de ladite unité de réseau optique est cohérent avec le numéro de trame de commutation de clé mémorisé localement dans ledit terminal optique en ligne, ledit terminal optique en ligne exécute le traitement correspondant à la cohérence desdites clés courantes ; si ledit résultat de la comparaison est que le numéro de trame de commutation de clé de ladite unité de réseau optique est incohérente avec le numéro de trame de commutation de clé mémorisé localement dans ledit terminal optique en ligne, ledit terminal optique en ligne exécute le traitement correspondant à l'incohérences desdites clés courantes.

12. Procédé selon la revendication 11, comprenant en outre :
à l'étape (c), si ledit terminal optique en ligne ne reçoit pas lesdits messages de réponse sur le numéro de trame de commutation de clé dans l'intervalle de temps prédéterminé, il y a envoi d'informations concernant l'échec de la détection de cohérence existant entre les clés courantes.
